Europäisches Patentamt

(19) European Patent Office

Office européen des brevets

(11) Numéro de publication: **0 034 092**
**B1**

(12) **FASCICULE DE BREVET EUROPEEN**

(45) Date de publication du fascicule du brevet:
02.11.83

(51) Int. Cl.³: **B 64 C 27/00,** F 16 F 15/04

(21) Numéro de dépôt: **81400167.3**

(22) Date de dépôt: **03.02.81**

(54) **Dispositif de suspension antirésonnante pour hélicoptère.**

(30) Priorité: **05.02.80 FR 8002505**

(43) Date de publication de la demande:
**19.08.81 Bulletin 81/33**

(45) Mention de la délivrance du brevet:
**02.11.83 Bulletin 83/44**

(84) Etats contractants désignés:
**DE GB IT**

(56) Documents cités:
**FR - A - 1 507 306**
**FR - A - 2 232 481**
**FR - A - 2 363 737**
**FR - A - 2 402 808**

(73) Titulaire: **SOCIETE NATIONALE INDUSTRIELLE AEROSPATIALE, 37 boulevard de Montmorency, F-75016 Paris Cedex 16 (FR)**

(72) Inventeur: **Mouille, René L. Villa "La pinéde" Le coton rouge, Chemin du Moulin de Testas, F-13100 Aix en Provence (FR)**
Inventeur: **Genoux, Gérard Charles Louis, 70, les Lavandines, F-13120 Gardanne (FR)**
Inventeur: **Hege, Pierre Etienne, Avenue Jean Giono Le Concorde, F-13100 Aix en Provence (FR)**

(74) Mandataire: **Barnay, André François et al, Cabinet Barnay 80 rue Saint-Lazare, F-75009 Paris (FR)**

Dispositif de suspension antirésonnante pour hélicoptère

Sur les hélicoptère à entraînement mécanique, le rotor sustentateur est relié par l'intermédiaire d'un abre de transmission vertical à un réducteur de vitesse assurant la transmission de puissance du ou des moteurs de propulsion de l'appareil. L'ensemble des éléments rotor-arbre-réducteur constitue, par rapport à la structure de l'hélicoptère, un ensemble relativement rigide.

Le réducteur de vitesse constitue la boîte de transmission principale et la fixation du carter de ladite boîte sur la structure de l'hélicoptère est généralement assurée par deux types de liaison. La première liaison comprend un certain nombre d'éléments rigides, tels que des barres ou des raidisseurs, en nombre au moins égal à trois, interposés obliquement entre la partie supérieure dudit carter et des points forts de la structure du fuselage. La seconde liaison est une liaison directe entre la partie inférieure de ce carter et ladite structure; elle est destinée à reprendre totalement ou partiellement le couple de réaction d'entraînement du rotor. D'autre part, le fonctionnement de ce dernier pour sustenter et propulser l'hélicoptère engendre une excitation vibratoire essentiellement dans le plan dudit rotor. Pour atténuer sa transmission au fuselage, on peut disposer, entre la partie inférieure du carter de la boîte de transmission et le fuselage, des éléments souples en translation dans un plan parallèle à celui du rotor, mais ayant une grande rigidité en rotation autour de son axe de manière à être en mesure de transmettre le couple de réaction d'entraînement du rotor.

Le brevet français FR-A-1 507 306, dont la demanderesse est titulaire, décrit une telle liaison élastique. Elle est formée d'une platine assouplie constituée par une plaque dans laquelle certains zones offrent des découpages, notamment à la façon d'une grille comportant des barreaux. La souplesse ainsi obtenue permet le filtrage des vibrations par déformation élastique de la platine au moins dans une direction ainsi privilégiée.

D'autres dispositions de platine de suspension entre la partie inférieure de la boîte de transmission principale et le dessus du fuselage sont décrites dans le brevet français FR-A-2 228 662 et dans la demande de brevet français FR-A-2 420 825 au nom de la demanderesse. Ces platines permettent à la fois d'obtenir, dans leur plan, une souplesse en translation mono ou multirirectionnelle et de transmettre le couple induit par la boîte de transmission sur le fuselage.

Tous ces dispositifs assurent un filtrage relativement efficace des vibrations engendrées par le rotor. Mais, sur les hélicoptères modernes rapides, l'amélioration du confort qui est souhaitée impose la recherche d'un niveau vibratoire encore plus bas. L'atténuation correspondante des vibrations peut être obtenue par des moyens complémentaires aux systèmes précédents. On peut utiliser par exemple des dispositifs résonateurs à lames ou à ressorts placés en différents points du fuselage de l'hélicoptère et éventuellement sur les commandes de vol. Ces résonateurs oscillent à leur fréquence propre, avec une amplitude et une phase telles qu'ils absorbent, au moins partiellement, les efforts alternés transmis par leurs points de fixation. Ces dispositifs présentent cependant des inconvénients majeurs. D'une part, de tels résonateurs doivent être disposés en chacun des points où des vibrations doivent être atténuées: il en résulte un important surcroît de masse. D'autre part, l'effet d'atténuation des vibrations obtenu avec chaque résonateur est limité au voisinage de son point de fixation. Enfin, la mise en place d'un résonateur en un point déterminé peut avoir pour effet d'amplifier les vibrations en d'autres points de l'appareil.

Pour pallier ces inconvénients, on a réalisé des résonateurs disposés au-dessus du moyeu du rotor, dont ils reçoivent directement leur excitation. Ces résonateurs peuvent être constitués par une masse battante, rappelée en position neutre par des ressorts antagonistes. De tels résonateurs font par exemple l'objet des demandes de brevets français FR-A-2 416 838 et FR-A-2 416 839 au nom de la demanderesse. Ces résonateurs offrent l'avantage de s'opposer aux vibrations au plus près de leur source, c'est-à-dire sur le moyeu de rotor lui-même. Ils sont d'autant plus efficaces qu'ils sont utilisés en complément des dispositifs de suspension de la partie inférieure de la boîte de transmission principale, tels que ceux décrits dans les brevets français FR-A-1 507 306 et FR-A-2 228 662.

Cependant, de tels ensembles de dispositifs antivibratoires (résonateurs de moyeu et liaisons souples entre boîte de transmission et fuselage), s'ils permettent en général d'obtenir un très bon niveau vibratoire sur les hélicoptères ayant plus de deux pales au rotor principal, présentent l'inconvénient d'une masse relativement importante et également d'un prix de revient élevé.

Un dispositif de suspension est connu par la demande de brevet français FR-A-2 363 737, dans lequel la boîte de transmission est fixée sur une platine rigide supportée par quatre groupes de suspension et d'amortissement qui comprennent des ressorts à barres de torsion et des leviers lestés par des masses battantes. Ce dispositif assure l'absorption de tous les mouvements d'oscillation de la boîte de transmission, y compris les mouvements verticaux dits de pompage. Toutefois, les groupes de suspension et d'amortissement ont une structure extrêmement complexe.

Un autre dispositif est connu par la demande de brevet français FR-A-2 232 481. Ce dispositif de suspension antirésonnante, destiné à un hélicoptère composé d'un fuselage, d'un ensemble de propulsion, d'un rotor et d'une boîte de transmission située entre ledit ensemble et ledit rotor et alignée sur l'axe de ce dernier, comporte un jeu d'au moins trois barres obliques de liaison, reliées à la partie supérieure de la boîte de transmission, et une platine de suspension de la boîte de transmission sur la structure du fuselage, la platine de suspension comprenant une partie centrale solidaire du fond de la boîte de transmission et des extensions radiales flexibles en nombre égal auxdites barres obliques, l'extrémité de chacune de ces extensions étant solidaire d'un levier muni à son extrémité libre d'une masse battante. Dans ce dispositif, les barres obliques relient directement le haut de la boîte de transmission au fuselage, de sorte qu'il n'y a pas d'absorption des oscillations verticales.

Le présent dispositif de suspension antirésonnante remédie aux inconvénients précédemment mentionnés. Il combine, de façon simple et dans un ensemble compact, une liaison élastique entre la partie inférieure de la boîte de transmission principale et le fuselage, et des masses battantes qui lui sont directement associées. Ce dispositif est efficace pour combattre les vibrations en provenance du rotor non seulement pour les excitations longitudinales et transversales, mais aussi pour les excitations verticales de pompage. Etant du genre indiqué en dernier lieu, il est en outre caractérisé par le fait que lesdites extensions radiales forment des bras coplanaires disposés en étoile autour de ladite partie centrale avec laquelle ils font corps, sensiblement rigides dans leur plan mais flexibles en direction perpendiculaire à celui-ci, chacun de ces bras étant relié, dans la région de son extrémité, d'une part au fuselage en un point fort de celui-ci, d'autre part à l'extrémité inférieure de la barre de liaison correspondante, par des articulations respectives décalées l'une par rapport à l'autre dans le sens longitudinal du bras et permettant à ce dernier des débattements par déformation en direction perpendiculaire à son plan, les leviers étant plus rigides que les bras flexibles.

Dans une forme d'exécution, l'articulation par laquelle chaque bras flexible est relié au fuselage est une articulation à palier d'axe contenu dans le plan de la platine et perpendiculaire à la direction longitudinale dudit bras et à l'axe de rotation du rotor, tandis que l'articulation par laquelle chaque bras flexible est relié à l'extrémité inférieure de la barre de liaison correspondante est de préférence une articulation à rotule. Dans une autre forme d'exécution, l'articulation par laquelle chaque bras flexible est relié au fuselage est une articulation à rotule, tandis que l'articulation par laquelle chaque bras flexible est relié à l'extrémité inférieure de la barre de liaison correspondante est de préférence un palier d'axe contenu dans le plan de la platine et perpendiculaire à la direction dudit bras et à l'axe de rotation du rotor, ledit palier étant avantageusement constitué par des roulements à billes ou à galets afin de réduire l'amortissement par frottement.

Les blas flexibles présentent avantageusement une largeur qui va en diminuant de la partie centrale de la platine vers leur extrémité, et comportant de préférence un évidement intérieur s'étendant suivant leur axe longitudinal.

Dans une forme d'exécution du dispositif selon l'invention, le levier portant la masse battante de chaque bras flexible est constitué par un prolongement de celui-ci dirigé vers l'extérieur, la masse battante étant située au delà de l'articulation au fuselage par rapport au centre de la platine.

Dans une autre forme d'exécution, le levier support de masse battante précité est constitué par un prolongement du bras flexible dirigé vers l'intérieur, la masse battante étant alors située dans l'évidement de ce dernier, entre l'articulation au fuselage et le centre de la platine.

L'articulation reliant chaque bras flexible au fuselage est en principe située entre la masse battante et l'articulation reliant ledit bras à la barre de liaison correspondante. On peut encore prévoir que l'articulation reliant chaque bras flexible à la barre de liaison correspondante soit située entre la masse battante et l'articulation reliant ledit bras au fuselage.

Le levier portant chaque masse battante peut être fait d'une seule pièce avec le bras flexible correspondant. Il peut aussi être rapporté sur ce dernier.

La description qui va suivre, en regard des dessins annexés à titre d'exemples non limitatifs, permettra de bien comprendre comment l'invention peut être mise en pratique.

Les figures 1 et 2 représentent schématiquement, respectivement en élévation et en plan, un dispositif de suspension selon l'invention dans une première forme d'exécution.

Les figures 3 et 4 représentent de même un dispositif selon l'invention dans une deuxième forme d'exécution.

Les figures 5 et 6 représentent à plus grande échelle, de manière détaillée, un mode de réalisation de l'un des bras flexibles tel qu'il apparaît respectivement sur les figures 1 et 2.

Les figures 7 et 8 représentent de même un mode de réalisation analogue de l'un des bras flexibles tel qu'il apparaît respectivement sur les figures 3 et 4.

Les figures 9 et 10 représentent, respectivement en élévation et en plan, un exemple de réalisation pratique d'un dispositif selon l'invention.

La figure 11 représente à plus grande échelle le détail XI de la figure 9.

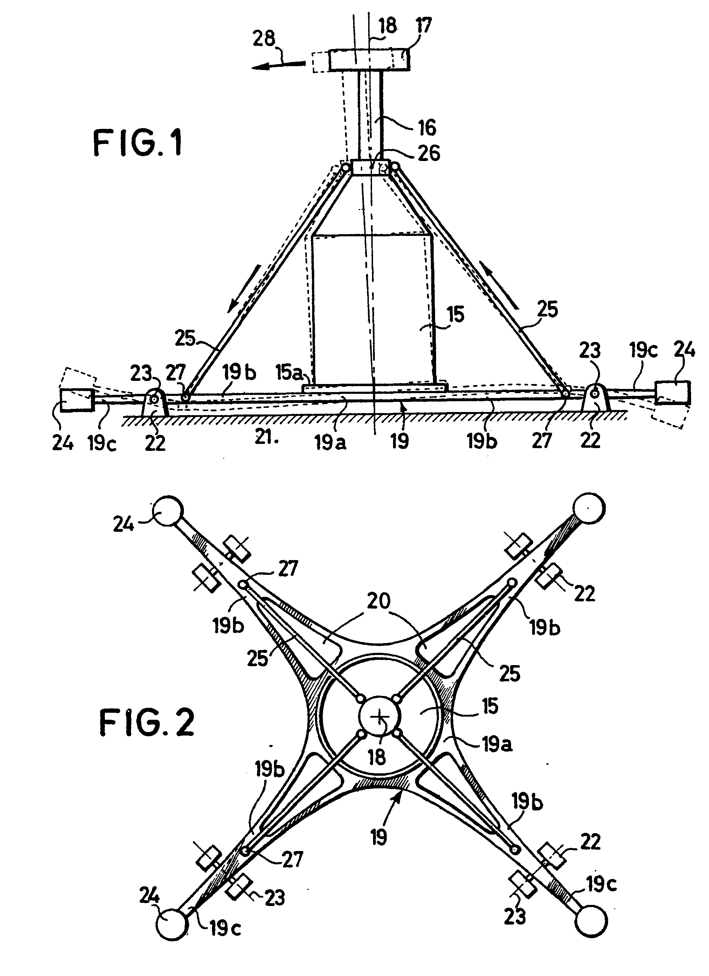

On voit sur la figure 1 la boîte de transmission principale 15 d'un hélicoptère, interposée entre un ensemble de propulsion non représenté et l'arbre 16 du rotor dont seul le moyeu 17 a été représenté. Les éléments 15, 16 et 17 sont alignés sur l'axe de rotation 18 du rotor.

Le fond 15a du carter de la boîte de transmission 15 est fixé par une couronne de boulons à la partie centrale 19a d'une platine 19 plane et souple, dont le plan est perpendiculaire à l'axe 18 et qui comporte des extensions radiales, au nombre de quatre dans le présent exemple, formant des bras flexibles 19b répartis régulièrement en étoile autour de la partie centrale 19a, avec laquelle ils font corps (figure 2). La largeur de ces bras 19b va en diminuant de la partie centrale 19a à leur extrémité extérieure, et ils comportent un évidement longitudinal interne 20 de forme sensiblement triangulaire.

Les bras flexibles 19b s'appuient, dans la région de leurs extrémités extérieures, sur des points forts de la partie supérieure du fuselage 21 de l'hélicoptère, par l'intermédiaire de paliers 22 dont les axes d'articulation 23 sont contenus dans le plan de la platine 19 et sont perpendiculaires à la direction radiale des bras respectifs ainsi qu'à l'axe 18. Ces paliers 22 sont constitués de façon telle qu'ils ne présentent quasiment ni amortissement, ni frottement, et que d'une part ils puissent transmettre au fuselage les efforts tranchants et les moments de flexion dont les bras 19b sont le siège dans leur plan, tandis que d'autre part ils autorisent auxdits bras de faibles débattements angulaires par pivotement de leurs extrémités autour des axes d'articulation 23, ainsi que représenté en tirets sur la figure 1.

Chaqe bras flexible 19b se prolonge au delà du palier 22 par une partie terminale 19c plus rigide formant un levier, qui porte à son extrémité une masse battante 24, l'ensemble 19c, 24 formant un système antirésonnant agissant par inertie.

La boîte de transmission principale 15 est également reliée à la structure du fuselage 21 — indirectement — au moyen d'un jeu de barres obliques 25. Celles-ci sont sensiblement concourantes à leurs extrémités supérieures en un point de focalisation 26 situé au sommet de la boîte de transmission 15, sur l'axe 18, et elles sont reliées à leurs extrémités inférieures, par l'intermédiaire d'une articulation à rotule 27, chacune à un bras flexible 19b correspondant, en un point de celui-ci situé au voisinage du palier d'articulation 22 et plus proche de l'axe 18 que ce dernier.

Dans le présent exemple, les barres obliques 25 sont au nombre de quatre, comme les bras flexibles 19b. Plus généralement, on considèrera que le nombre de bras flexibles de la platine 19 est toujours égal au nombre de barres obliques 25, ce nombre n'étant jamais inférieur à trois.

La réaction du couple d'entraînement du rotor passe intégralement du fond 15a de la boîte de transmission 15 dans le fuselage 21 par l'intermédiaire des bras 19b de la platine souple 19, qui travaillent en flexion dans leur plan. Les efforts tranchants horizontaux engendrés dans le plan du rotor et transmis par l'arbre 16 et la boîte de transmission 15 sont repris sur la structure du fuselage par les bras flexibles 19b travaillant dans leur plan en traction ou en compression longitudinale. Ces contraintes ne déforment pas sensiblement les bras 19b. Par contre, les moments 28 d'axe horizontal dans le plan du rotor et les moments dus aux efforts tranchants précités sont également transmis à la structure 21 par les bras 19b, mais avec atténuation, car ils infligent à ces derniers des déformations de flexion en direction parallèle à l'axe 18, comme indiqué en tirets sur la figure 1.

Les efforts verticaux de portance du rotor ainsi que les réactions horizontales d'appui dues aux efforts dans le plan du rotor et situées au niveau de l'attache supérieure des barres obliques 25 chargent celles-ci longitudinalement et sont transmis à la structure du fuselage 21 par l'intermédiaire des articulations 27 et 22.

On voit que, du fait de la géométrie de l'ensemble, les efforts dissymétriques dans le plan du rotor provoquent sur chaque bras 19b, entre l'articulation inférieure 27 de la barre 25 et le palier 22 voisin, un moment qui accentue la déformation du bras causée par la contrainte en flexion appliquée corrélativement par le fond 15a de la boîte de transmission 15. Ainsi, les efforts et moments dynamiques longitudinaux et latéraux (par rapport à la direction de vol de l'hélicoptère) engendrés dans le plan du rotor avec une fréquence $b\,\Omega$ ($b$ étant le nombre de pales du rotor et $\Omega$ sa vitesse de rotation), que le présent dispositif a essentiellement pour rôle d'atténuer, ainsi que les efforts dynamiques verticaux de «pompage», sont filtrés parce que les réactions élastiques aux points d'attache 22 sur fuselage correspondant aux déformations des bras souples de la platine sont contrebalancées par les efforts d'inertie développées par les masses battantes et qui donnent auxdits points d'attache des réactions de sens contraire au sens des réactions précitées. Cet effet complète l'action filtrante de la platine souple 19.

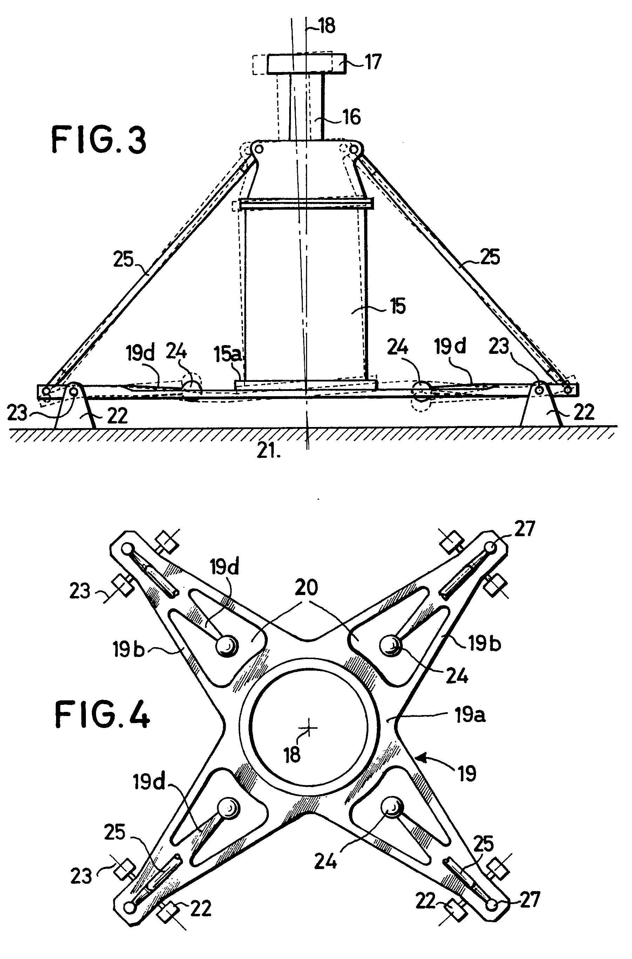

Dans la variante d'exécution représentée aux figures 3 et 4, les éléments qui sont homologues à ceux des figures 1 et 2 portent les mêmes références. Les seules différences résident en ceci que les extensions extérieures 19c des bras 19b sont remplacées par des extensions 19d intérieures, c'est-à-dire dirigées vers l'axe central 18, les masses 24 débattant à travers les évidements 20 des bras 19b, et que les articulations à rotule 27 des barres de liaison 25 sont situées au delà des articulations à palier 22, c'est-à-dire plus loin de l'axe 18 que ces dernières. Un tel ensemble, plus compact que celui des figures 1 et 2, fonctionne de la même manière.

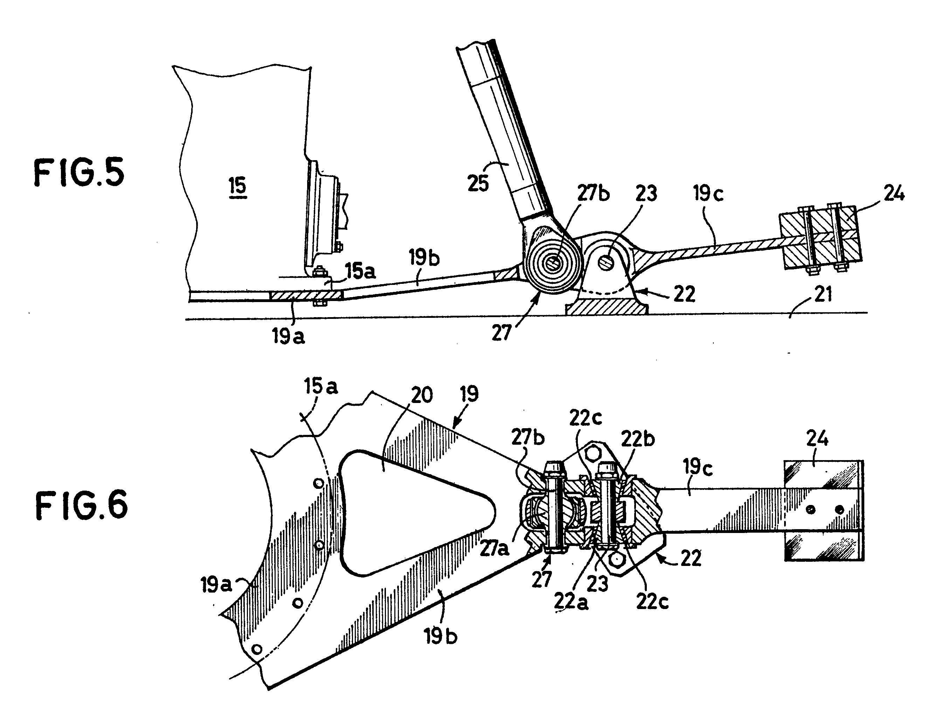

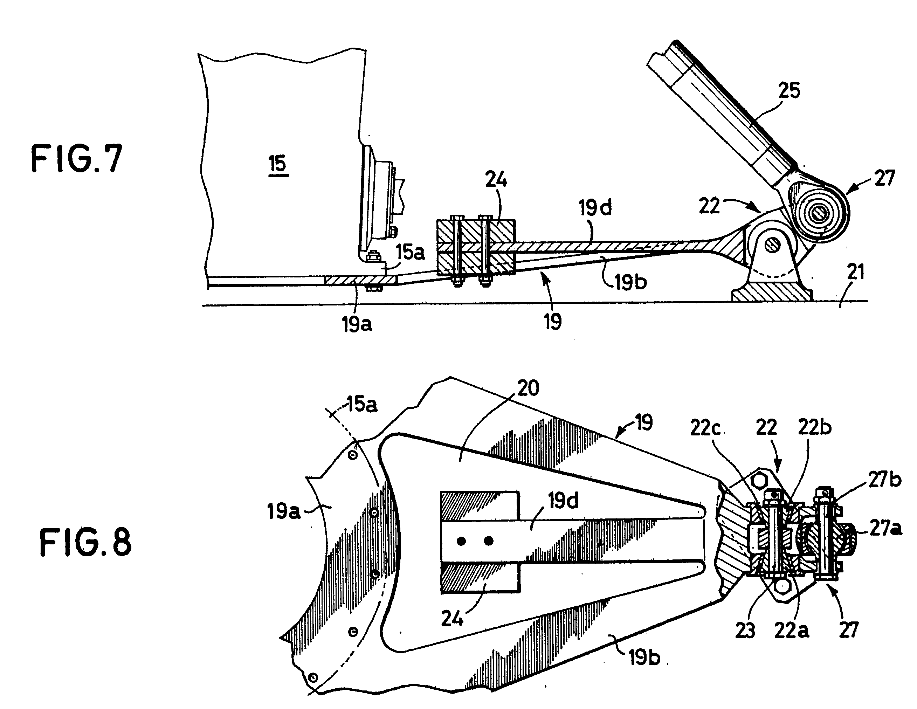

Les figures 5 et 6 montrent un mode de réalisation pratique du dispositif des figures 1 et 2, et les figures 7 et 8 un mode de réalisation semblable pour celui des figures 3 et 4. Dans les dispositifs ainsi réalisés, l'embase centrale 19a de la platine souple 19, ses bras flexibles 19b, les extensions 19c ou 19d de ceux-ci et les supports des articulations à rotule 27 et à palier 22 sont constitués par une pièce monobloc métallique forgée. Les extrémités inférieures des barres obliques 25 sont respectivement attachées à la platine 19 par une rotule sphérique 27a autolubrifiante traversée par un axe 27b. Dans les articulations à palier 22, l'axe 23 s'appuie sur un double palier conique 22a, b avec interposition d'une couche d'élastomère 22c, de manière à permettre les faibles déplacements angulaires désirés avec une friction négligeable.

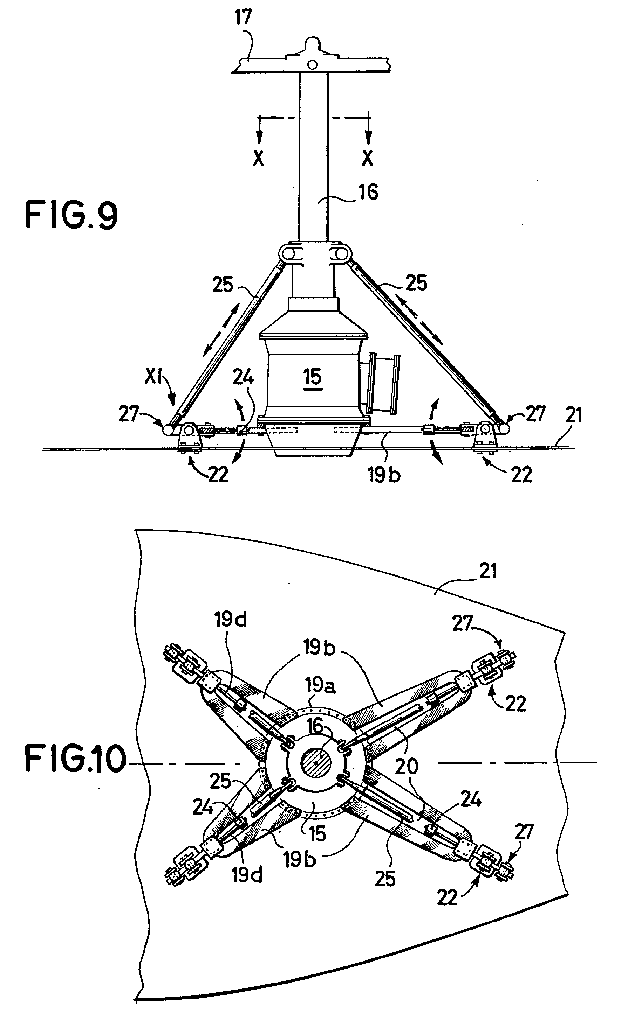

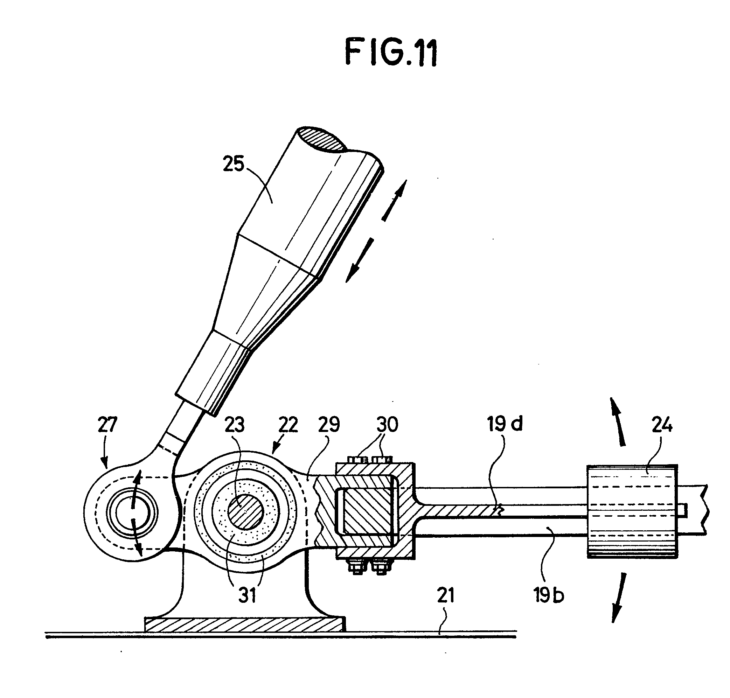

Les figures 9, 10 et 11 montrent une forme de réalisation pratique du dispositif des figures 3 et 4. Ici, les bras flexibles 19b sont réalisés au moyen de lames métalliques boulonnées sur une embase centrale 19a fixée au fond du carter de la boîte de transmission principale 15. Les évidements longitudinaux 20 de ces lames permettent de loger les masses battantes 24 montées aux extrémités de lamelles flexibles 19d rapportées sur les bras 19b, par l'intermédiaire d'une pièce 29 formant l'extrémité de chacun des bras 19b au moyen de boulons 30 traversant le tout. Chaque pièce 29 comporte l'articulation à palier 22 de liaison au fuselage 21, constituée ici par une articulation à manchon en lamifié comportant deux couches d'élastomère 31 autour de l'axe 23, et l'articulation à rotule 27 de liaison à la barre oblique correspondante. Dans ce mode de réalisation, les bras flexibles 19b sont métalliques et réalisés par exemple par découpage dans une tôle épaisse. Ils peuvent également, dans une forme d'exécution préférée, être réalisés en un matériau stratifié fait de fibres à haute résistance noyées dans une résine synthétique thermodurcie.

### Revendications

1. Dispositif de suspension antirésonnante pour hélicoptère composé d'un fuselage, d'un ensemble de propulsion, d'un rotor et d'une boîte de transmission située entre ledit ensemble et ledit rotor et alignée sur l'axe de ce dernier, ce dispositif comportant un jeu d'au moins trois barres obliques de liaison (25), reliées à la partie supérieure de la boîte de transmission (15), et une platine (19) de suspension de la boîte de transmission (15) sur la structure du fuselage (21), la platine de suspension (19) comprenant une partie centrale (19a) solidaire du fond (15a) de la boîte de transmission (15) et des extensions radiales flexibles en nombre égal auxdites barres obliques, l'extrémité de chacune de ces extensions étant solidaire d'un levier (19c, 19d) muni à son extrémité libre d'une masse battante (24), caractérisé par le fait que lesdites extensions radiales forment des bras (19b) coplanaires disposés en étoile autour de ladite partie centrale (19a) avec laquelle ils font corps, sensiblement rigides dans leur plan mais flexibles en direction perpendiculaire à celui-ci, chacun de ces bras (19b) étant relié, dans la région de son extrémité, d'une part au fuselage en un point fort (22) de celui-ci, d'autre part à l'extrémité inférieure de la barre de liaison (25) correspondante, par des articulations respectives (23, 27) décalées l'une par rapport à l'autre dans le sens longitudinal du bras (19b) et permettant à ce dernier des débattements par déformation en direction perpendiculaire à son plan, les leviers (19c et 19d) étant plus rigides que les bras flexibles (19b).

2. Dispositif selon la revendication 1, caractérisé par le fait que l'articulation (23) par laquelle chaque bras flexible (19b) est relié au fuselage (21) est une articulation à palier d'axe contenu dans le plan de la platine (19) et perpendiculaire à la direction longitudinale dudit bras.

3. Dispositif selon la revendication 2, caractérisé par le fait que l'articulation (27) par laquelle chaque bras flexible (19b) est relié à l'extrémité inférieure de la barre de liaison (25) correspondante est une articulation à rotule.

4. Dispositif selon la revendication 1, caractérisé par le fait que l'articulation (23) par laquelle chaque bras flexible (19b) est relié au fuselage (21) est une articulation à rotule.

5. Dispositif selon la revendication 4, caractérisé par le fait que l'articulation (27) par laquelle chaque bras flexible (19b) est relié à l'extrémité inférieure de la barre de liaison (25) correspondante est une articulation à palier.

6. Dispositif selon l'une quelconque des revendications 1 à 5, caractérisé par le fait que les bras flexibles (19b) présentent une largeur que va en diminuant de la partie centrale (19a) de la platine (19) vers leur extrémité.

7. Dispositif selon l'une quelconque des revendications 1 à 6, caractérisé par le fait que les bras flexibles (19b) comportent un évidement intérieur (20) s'étendant suivant leur axe longitudinal.

8. Dispositif selon l'une quelconque des revendications 1 à 7, caractérisé par le fait que le levier portant la masse battante (24) de chaque bras flexible (19b) est constitué par un prolongement (19c) de celui-ci dirigé vers l'extérieur, la masse battante (24) étant située au delà de l'articulation (23) au fuselage (21) par rapport au centre de la platine (19).

9. Dispositif selon la revendication 7, caractérisé par le fait que le levier portant la masse battante (24) de chaque bras flexible (19b) est constitué par un prolongement (19d) de celui-ci dirigé vers l'intérieur, la masse battante (24) étant située dans l'évidement (20) du bras flexible (19b), entre l'articulation (23) au fuselage et le centre de la platine (19).

10. Dispositif selon l'une quelconque des revendications 1 à 9, caractérisé par le fait que l'articulation (23) reliant chaque bras flexible (19b) au fuselage (21) est située entre la masse battante (24) et l'articulation (27) reliant ledit bras à la barre de liaison (25) correspondante.

11. Dispositif selon l'une quelconque des revendications 1 à 9, caractérisé par le fait que l'articulation (27) reliant chaque bras flexible (19b) à la barre de liaison (25) correspondante est située entre la masse battante (24) et l'articulation (23) reliant ledit bras au fuselage.

12. Dispositif selon l'une quelconque des revendications 1 à 11, caractérisé par le fait que le levier (19c, 19d) portant chaque masse battante (24) est fait d'une seule pièce avec le bras flexible (19b) correspondant.

13. Dispositif selon l'une quelconque des revendications 1 à 11, caractérisé par le fait que le levier (19c, 19d) portant chaque masse battante (24) est rapporté sur le bras flexible (19b) correspondant.

**Claims**

1. Anti-resonance suspension device for helicopters having a fuselage, a propulsion assembly, a rotor and a transmission box located between said assembly and sait rotor and in alignment with the axis of the latter, the device comprising a set of at least three inclined connecting rods (25) coupled to the upper part of the transmission box (15), and a suspension plate (19) for the transmission box (15) on the structure of the fuselage (21), the suspension plate (19) comprising a central portion (19a) solid with the base (15a) of the transmission box (15) and flexible radial extensions equal in number to the number of said inclined rods, the extremity of each of these extensions being solid with a lever (19c, 19d) provided at its free end with an oscillatable mass (24), characterised by the fact that the said radial extensions form co-planar arms (19b) disposed in star formation around the said central portion (19a) with which they form a united body, the arms being substantially rigid in their plane but flexible in a direction perpendicular thereto, each of these arms (19b) being connected, in the region of its extremity, on the one hand to the fuselage at a strong point (22) thereof and on the other hand to the lower end of the corresponding connecting rod (25), by respective joints (23, 27) offset relative to each other along the longitudinal direction of the arms (19b) and enabling the arms to undergo oscillatory movements by deformation in a direction perpendicular to their plane, the levers (19c and 19d) being more rigid than the flexible arms (19b).

2. Device according to claim 1, characterised by the fact that the joint (23) by which each flexible arm (19b) is connected to the fuselage (21) is a bearing joint with its axis in the plane of the plate (19) and perpendicular to the longitudinal direction of the said arm.

3. Device according to claim 2, characterised by the fact that the joint (27) by which each flexible arm (19b) is connected to the lower end of the corresponding connecting rod (25) is a swivel joint.

4. Device according to claim 1, characterised by the fact that the joint (23) by which each flexible arm (19b) is connected to the fuselage (21) is a swivel joint.

5. Device according to claim 4, characterised by the fact that the joint (27) by which each flexible arm (19b) is connected to the lower end of the corresponding connecting rod (25) is a bearing joint.

6. Device according to any one of claims 1 to 5, characterised by the fact that the flexible arms (19b) have a breadth which decreases from the central portion (19a) of the plate (19) towards their extremities.

7. Device according to any one of claims 1 to 6, characterised by the fact that the flexible arms (19b) each have an internal aperture (20) extending along their longitudinal axis.

8. Device according to any one of claims 1 to 7, characterised by the fact that the lever carrying the oscillatable mass (24) of each flexible arm (19b) is constituted by an outwardly directed extension (19c) of the arm, the oscillatable mass (24) being positioned on the other side of the joint (23) with the fuselage (21) in relation to the centre of the plate (19).

9. Device according to claim 7, characterised by the fact that the lever carrying the oscillatable mass (24) of each flexible arm (19b) is constituted by an inwardly directed extension (19d) of the arm, the oscillatable mass (24) being positioned within the aperture (20) in the flexible arm (19b) between the joint (23) with the fuselage and the centre of the plate (19).

10. Device according to any one of claims 1 to 9, characterised by the fact that the joint (23) connecting each flexible arm (19b) to the fuselage (21) is positioned between the oscillatable mass (24) and the joint (27) connecting the said arm to the corresponding connecting rod (25).

11. Device according to any one of claims 1 to 9, characterised by the fact that the joint (27) connecting each flexible arm (19b) to the corresponding connecting rod (25) is positioned between the oscillatable mass (24) and the joint (23) connecting the said arm to the fuselage.

12. Device according to any one of claims 1 to 11, characterised by the fact that the lever (19c, 19d) carrying each oscillatable mass (24) is made in one piece with the corresponding flexible arm (19b).

13. Device according to any one of claims 1 to 11, characterised by the fact that the lever (19c, 19d) carrying each oscillatable mass (24) is borne on the corresponding flexible arm (19b).

## Patentansprüche

1. Schwingungsgedämpfte Aufhängungsvorrichtung für Hubschrauber, bestehend aus einem Flugkörperrumpf, einem Antriebsaggregat, einem Rotor und einem zwischen dem Aggregat und dem Rotor angeordneten Übertragungsglied, das zur Rotorachse fluchtend ausgerichtet ist, die ferner eine Gruppe von mindestens drei schräg verlaufenden, an den oberen Teil des Übertragungsglieds (15) angeschlossene Verbindungsstreben (25) aufweist, sowie eine Trageplatte (19) für das Übertragungsglied (15) über dem Aufbau des Flugkörperrumpfes (21), wobei die Trageplatte (19) ein mit dem Boden (15a) des Übertragungsglieds (15) fest verbundenes Mittelteil (19a) sowie eine den Verbindungsstreben entsprechende Anzahl radial verlaufender, biegsamer Vorsprünge aufweist, und wobei das Ende jedes Vorsprungs fest mit einem an seinem freien Ende mit einer Schwingmasse versehenen Hebel (19c, 19d) verbunden ist, dadurch gekennzeichnet, dass die radialen Vorsprünge koplanare, sternförmig um das Mittelteil (19a) angeordnete und mit diesem fest verbundene, in Richtung ihrer Ebene merklich steife, senkrecht dazu jedoch biegsame Arme (19b) bilden, wobei jeder dieser Arme (19b) in seinem endseitigen Bereich einerseits mit dem Flugkörperrumpf über ein Anschlussglied (22), andererseits mit dem unteren Ende der zugeordneten Verbindungsstrebe durch entsprechende Gelenke verbunden ist, die in longitudinaler Richtung des Arms (19b) gegeneinander versetzt sind und dem Arm durch Verformung in zu seiner Ebene senkrechter Richtung Schwingbewegungen ermöglichen, wobei die Hebel (19c, 19d) steifer ausgebildet sind als die biegsamen Arme (19b).

2. Vorrichtung nach Anspruch 1, dadurch gekennzeichnet, dass das Gelenk (23), über welches jeder biegsame Arm (19b) mit dem Flugkörperrumpf (21) verbunden ist, ein Zapfengelenk mit in der Ebene der Trageplatte (19) und senkrecht zur Längsrichtung des Arms angeordneter Achse ist.

3. Vorrichtung nach Anspruch 2, dadurch gekennzeichnet, dass das Gelenk (27), über welches jeder biegsame Arm (19b) mit dem unteren Ende der zugeordneten Verbindungsstrebe (25) verbunden ist, als Kugelgelenk ausgebildet ist.

4. Vorrichtung nach Anspruch 1, dadurch gekennzeichnet, dass das Gelenk (23), über welches jeder biegsame Arm (19b) mit dem Flugkörperrumpf (21) verbunden ist, als Kugelgelenk ausgebildet ist.

5. Vorrichtung nach Anspruch 4, dadurch gekennzeichnet, dass das Gelenk (27), über welches jeder biegsame Arm (19b) mit dem unteren Ende der zugeordneten Verbindungsstrebe (25) verbunden ist, als Zapfengelenk ausgebildet ist.

6. Vorrichtung nach einem der Ansprüche 1 bis 5, dadurch gekennzeichnet, dass die Breite der biegsamen Arme (19b) vom Mittelteil (19a) der Trageplatte (19) zu ihrem Ende hin abnimmt.

7. Vorrichtung nach einem der Ansprüche 1 bis 6, dadurch gekennzeichnet, dass die biegsamen Arme (19b) mit einer längs ihrer Achse sich erstreckenden, innenseitigen Ausnehmung (20) versehen sind.

8. Vorrichtung nach einem der Ansprüche 1 bis 7, dadurch gekennzeichnet, dass der die Schwingmasse (24) tragende Hebel eines jeden biegsamen Arms (19b) von einer auswärts gerichteten Verlängerung (19c) dieses Arms gebildet ist, wobei die Schwingmasse (24) jenseits des Gelenks (23) am Flugkörperrumpf (21) in bezug auf die Mitte der Trageplatte (19) angeordnet ist.

9. Vorrichtung nach Anspruch 7, dadurch gekennzeichnet, dass der die Schwingmasse (24) tragende Hebel eines jeden biegsamen Arms (19b) von einer einwärts gerichteten Verlängerung (19d) dieses Arms gebildet ist, wobei die Schwingmasse (24) in der Ausnehmung (20) des biegsamen Arms (19b) zwischen dem Gelenk (23) am Flugkörperrumpf und der Mitte der Trageplatte angeordnet ist.

10. Vorrichtung nach einem der Ansprüche 1 bis 9, dadurch gekennzeichnet, dass das jeweils den biegsamen Arm (19b) mit dem Flugkörperrumpf (21) verbindende Gelenk (23) zwischen der Schwingmasse (24) und dem Gelenk (27), das diesen Arm mit der zugeordneten Verbindungsstrebe verbindet, angeordnet ist.

11. Vorrichtung nach einem der Ansprüche 1 bis 9, dadurch gekennzeichnet, dass das jeweils den biegsamen Arm (19b) mit der zugeordneten Verbindungsstrebe (25) verbindende Gelenk (27) zwischen der Schwingmasse (24) und dem diesen Arm mit dem Flugkörperrumpf verbindenden Gelenk (23) angeordnet ist.

12. Vorrichtung nach einem der Ansprüche 1 bis 11, dadurch gekennzeichnet, dass der jeweils die Schwingmasse (24) tragende Hebel (19c, 19d) einstückig mit dem zugeordneten biegsamen Arm (19b) ausgebildet ist.

13. Vorrichtung nach einem der Ansprüche 1 bis 11, dadurch gekennzeichnet, dass der jeweils die Schwingmasse tragende Hebel (19c, 19d) dem zugeordneten biegsamen Arm (19b) angefügt ist.

FIG.1

FIG.2

FIG.3

FIG.4

FIG.5

FIG.6

0 034 092

FIG.7

FIG.8

FIG.9

FIG.10

# FIG.11